Europäisches Patentamt

(19) European Patent Office

Office européen des brevets

(11) Publication number: **0 030 102**
**A1**

# EUROPEAN PATENT APPLICATION

(21) Application number: **80304151.6**

(22) Date of filing: 20.11.80

(51) Int. Cl.³: **C 09 J 3/00**

(30) Priority: 23.11.79 GB 7940515

(43) Date of publication of application:
10.06.81 Bulletin 81/23

(84) Designated Contracting States:
BE CH DE FR GB IT LI LU NL

(71) Applicant: BL CARS LIMITED
35-38 Portman Square
London W1H 0HQ(GB)

(72) Inventor: O'Neill, John Sidney
21 Rope Walk
Alcester Warwickshire(GB)

(72) Inventor: Wood, Christopher John
20 Greenland Rise Damsonwood
Solihull(GB)

(74) Representative: Waters, Jeffrey
BL Patent and Trade Mark Department Cowley Body
Plant
Cowley Oxford OX4 5NL(GB)

(54) Control of adhesive bond thickness.

(57) Glass beads having diameters within the range of from 100 to 400 micrometers and occupying up to 30% by volume of the mixture, are admixed with adhesive. When two surfaces to be adhered are pressed together, the glass beads produce a bond of a certain thickness. Because the bond thickness can be controlled in this way, the bond strength can also be so controlled. The method can be used for securing together parts of vehicle bodies.

EP 0 030 102 A1

ADHESIVES    TITLE MODIFIED
see front page

This invention relates to adhesives.

Although the various parts of motor vehicle bodies are usually welded or bolted together, it is sometimes advantageous for them to be secured together with adhesive. However, it is important for the bond to be of a certain strength, which depends on the thickness of the bond, but this is difficult to control.

The use of wires to space apart surfaces to be joined together has been proposed in laboratory conditions, and in the aerospace industry adhesives in the form of film are used, the film containing an inert metrix for determining the thickness of the bond.

The invention provides an adhesive which includes glass heads admixed therewith, the heads having diameters within the range of from 100 to 400 micrometers and occupying up to 30% by volume of the mixture.

The use of glass ensures that the bond is of the desired thickness while not substantially affecting the strength of the bond.

Advantageously, the adhesive is of the cross-linking polymeric type and is preferably an epoxy-based adhesive.

The diameter of the beads is preferably within the range of from 200 to 300 micrometers.

The invention is of particular use in the automotive industry, where body panels and other parts for example, of alloy, may be secured together by the adhesive.

It should be noted there will normally be a certain amount of spread in the diameter of the beads, and the thickness of the bond will tend to lie in the region of the diameter of the larger beads. The amount of spread can be reduced by sieving, for example, until the range of diameters is $\pm$ 10%, preferably $\pm$ 5%. The beads may be but do not have to be spherical. It has been found that glass beads normally used for sandblasting (known as "ballotini") are suitable for the present invention.

An adhesive in accordance with the invention will now be described by way of example, with reference to the accompanying drawings, which are graphs of the strength and thickness of the bond at various strengths of mixture.

The adhesive mixture comprised EC 2214, a single part aluminium-filled heat curing epoxy paste and ballotini (that is, beads) of 180 to 300 $\mu$m diameter. A measured weight of epoxy paste was warmed to room temperature, and a measured weight of ballotini was stirred in and thoroughly mixed by hand.

Two sheets of 16 swg., Biometals BB-2, an aluminium-magnesium alloy were then prepared. Strips of 130mm x 20mm were cut from the sheet which was degreased by swabbing with M.E.K. and then etched in chromic-sulphuric acid solution for 5 minutes, rinsed with deionised water and then dried.

The adhesive mixture was then applied to the strips, which were lightly pressed together until the minimum bond thickness was limited by the ballotini.

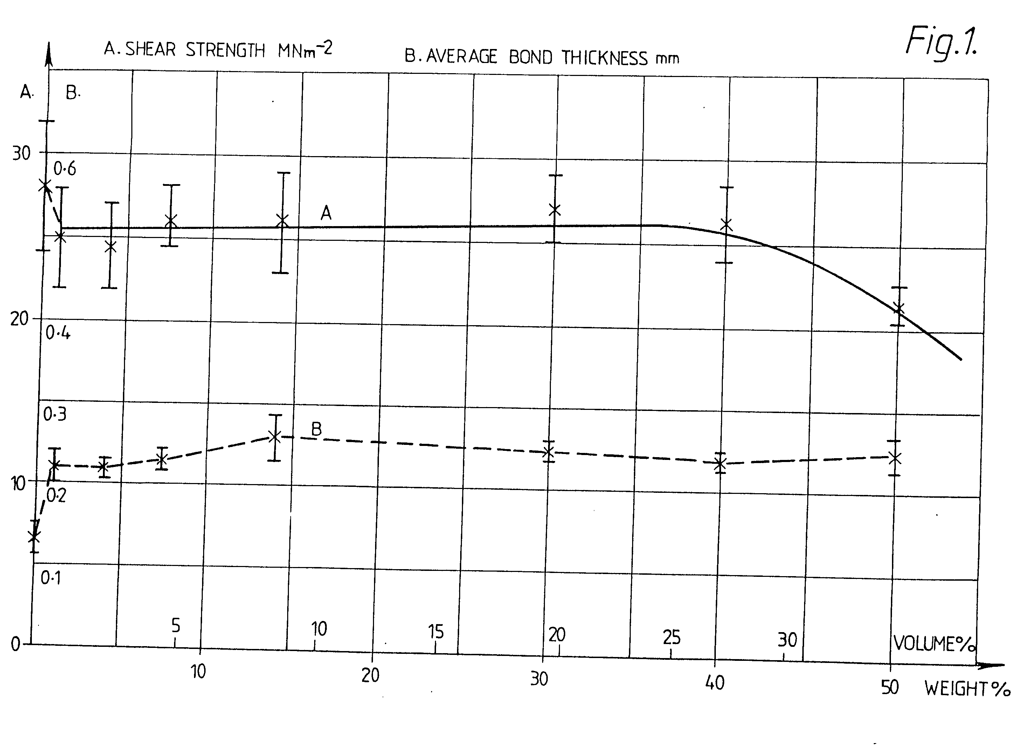

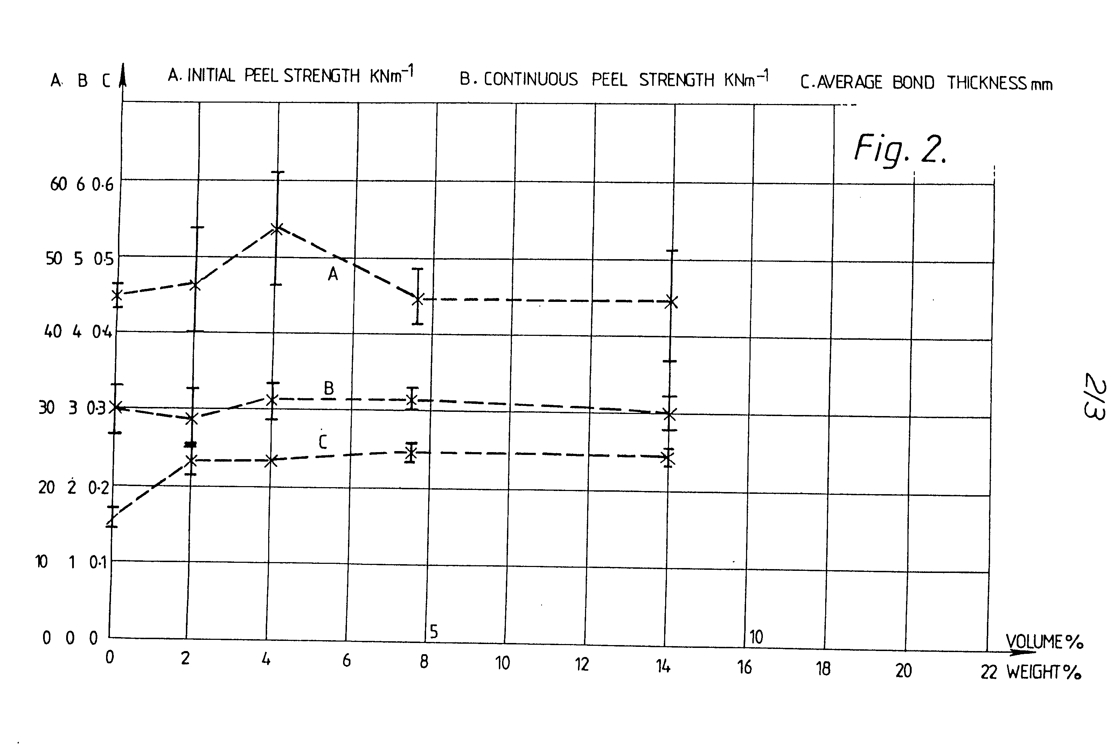

Measurements were made on the specimens as follows. Referring to Figure 1, lap shear strength (measured on a Mayes LU-50 testing machine at a strain rate of 1mm/min) in MNm$^{-2}$ was measured at various ballotini loadings (plot A) and the average bond thickness (plot B) was also measured. Five samples were prepared for each

0030102

loading and the results averaged. Referring to Figure 2, five samples of various ballotini loadings were again measured. Plot A shows initial peel strength in $MNm^{-1}$, plot B shows continuous peel strength in $MNm^{-1}$, both being measured on a Mayes LU-50 testing machine. Plot C shows average bond thickness.

With ballotini filled adhesive the bond thickness was consistently 0.24mm ± 0.02mm and did not vary with ballotini additions up to 40% by weight. Beyond 40% there seemed to be a greater resistance to developing a single layer of the glass spheres and hence thicker bonds were formed. This was more apparent with the T-peel specimens because the jigging method, using springclips to hold the specimens together, exerts relatively light loads.

The addition of ballotini up to 40% by weight had no apparent effect on shear or peel strengths but at 50% there did seem to be some reduction in properties. The 40% ballotini addition also appeared to be the maximum limit at which there was easy mixing and handling of the material.

Lap shear strength variation with exposure time to salt

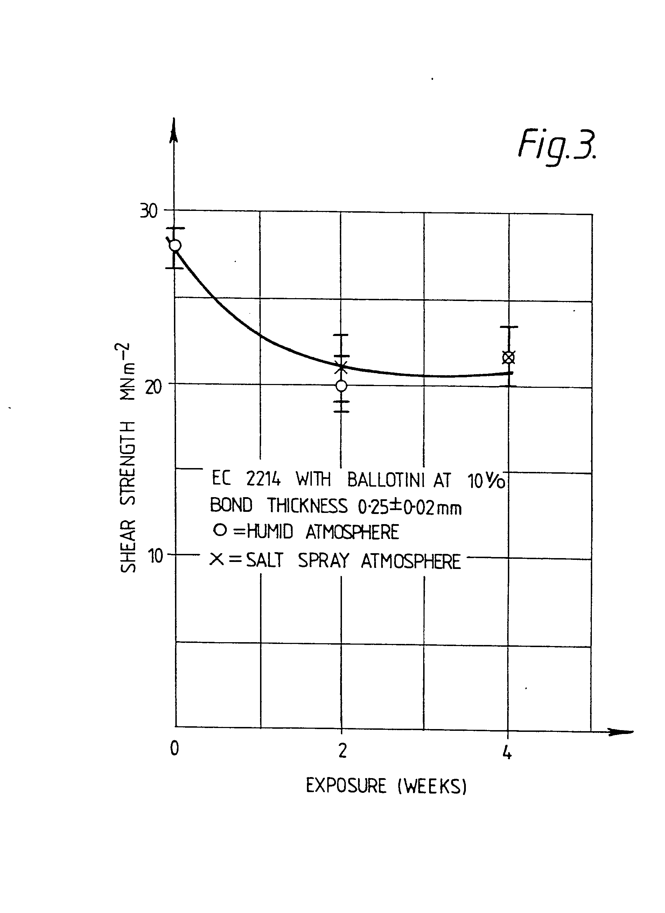

spray and humid environments is shown in Figure 3.

The reaction to aggressive environments of epoxy adhesives containing glass ballotini at 10% by volume was examined after a short exposure period of 4 weeks. Within this limited period there seemed to be no adverse reaction.

The use of ballotini establishes a simple way to control bond-line thickness and hence give uniformity of strength. There is also a cost advantage, the ballotini costing less than a comparable volume of adhesive.

CLAIMS

1.    An adhesive which includes glass beads admixed therewith, the beads having diameters within the range of from 100 to 400 micrometers and occupying up to 30% by volume of the mixture.

2.    An adhesive as claimed in claim 1, wherein the adhesive is of the cross-linking polymeric type.

3.    An adhesive as claimed in claim 2, wherein the adhesive is an epoxy-based adhesive.

4.    An adhesive as claimed in any one of claims 1 to 3, wherein the diameter of the beads is within the range of from 200 to 300 micrometers.

5.    An adhesive as hereinbefore described with reference to the accompanying drawings.

6     Two surfaces joined by an adhesive as claimed in any one of claims 1 to 5.

7.    Two aluminium alloy parts joined by an adhesive as claimed in any one of claims 1 to 5.

8.    A vehicle incorporating two body parts of aluminium alloy as claimed in claim 7.

Fig.1.

A.SHEAR STRENGTH MNm$^{-2}$    B.AVERAGE BOND THICKNESS mm

1/3

0030102

Fig. 2.

A. INITIAL PEEL STRENGTH KNm⁻¹    B. CONTINUOUS PEEL STRENGTH KNm⁻¹    C. AVERAGE BOND THICKNESS mm

*Fig.3.*

EC 2214 WITH BALLOTINI AT 10%
BOND THICKNESS 0·25±0·02mm
O = HUMID ATMOSPHERE
X = SALT SPRAY ATMOSPHERE

SHEAR STRENGTH $MNm^{-2}$

EXPOSURE (WEEKS)

**European Patent Office**

**EUROPEAN SEARCH REPORT**

Application number

EP 80 30 4151

## DOCUMENTS CONSIDERED TO BE RELEVANT

| Category | Citation of document with indication, where appropriate, of relevant passages | Relevant to claim |
|---|---|---|
| X | DE - A - 2 130 773 (ISKRA ZAVOD)<br>* Page 3, claims 1,2; page 2, lines 11-13 * | 1-3,6 |
| | -- | |
| X | GB - A - 1 203 933 (ALKALINE BATTERIES)<br>* Page 1, lines 42-50 * | 1-3,6 |
| | -- | |
| X | CHEMICAL ABSTRACTS, vol. 77, 1972, page 54, no. 49515a<br>Columbus, Ohio, U.S.A.<br>& JP - A - 71 30953 (TOKYO SHI-BAURA ELECTRIC) 08-09-1971<br>* Abstract * | 1-4,6 |
| | ---- | |

### CLASSIFICATION OF THE APPLICATION (Int. Cl.3)

C 09 J 3/00

### TECHNICAL FIELDS SEARCHED (Int. Cl.3)

C 09 J 3/00
3/16

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-02-1981 | GIRARD |

EPO Form 1503.1   06.78